# DEMANDE DE BREVET EUROPEEN

(11) **EP 0 917 987 A1**
(43) Date de publication de la demande: **26.05.1999**
(21) Numéro de dépôt: 98440260.2
(22) Date de dépôt: 18.11.1998
(51) Int. Cl.: B60R 1/08

(54) **Porte-miroir comportant une zone réfléchissante divergente**

(30) Priorité: 24.11.1997 FR 9714881
(71) Demandeur: MAGNETI MARELLI FRANCE, F-92000 Nanterre (FR)
(72) Inventeur: Juszczack, Frédéric, 57260 Dieuze (FR); Fanelli, Philippe, 89140 Gisy les Nobles (FR)
(74) Mandataire: Nuss, Pierre

(57) **Abrégé**

La présente invention concerne un porte-miroir (1) destiné à être monté dans un boîtier de rétroviseur extérieur par l'intermédiaire d'un dispositif de montage pivotable à commande directe par appui sur le miroir (2) équipant ledit porte-miroir (1) ou à commande à distance au moyen d'un dispositif à actionnement manuel ou motorisé.

Porte-miroir caractérisé en ce qu'il comporte une zone réfléchissante (3) divergente par rapport au miroir (2), s'étendant latéralement en prolongement de la surface de réception du miroir (2), en position de service du rétroviseur, et dont le revêtement réfléchissant est une couche réfléchissante chromée ou vernie appliquée directement sur la matière du porte-miroir (1) formant ladite zone réfléchissante (3).

L'invention est plus particulièrement applicable dans le domaine de la réalisation de dispositifs de rétrovision pour véhicules automobiles.

## Description

La présente invention concerne le domaine des véhicules automobiles, en particulier de leurs accessoires, et notamment leurs moyens de rétrovision et a pour objet un porte-miroir comportant une zone réfléchissante divergente.

Actuellement, pour permettre aux automobilistes de surveiller la circulation à l'arrière et sur les côtés de leur véhicule, en particulier lors des manoeuvres de dépassement ou garage, les véhicules automobiles sont généralement équipés d'un rétroviseur intérieur central et de deux rétroviseurs extérieurs fixés chacun sur une portière avant.

Ainsi, le miroir intérieur central permet essentiellement la surveillance de la zone située à l'arrière du véhicule, notamment pour apprécier l'approche ou l'éloignement d'autres véhicules, alors que les rétroviseurs extérieurs latéraux sont destinés à permettre le contrôle des zones latérales dudit véhicule, immédiatement lors des manoeuvres de dépassement ou de changement de file, ainsi que pour les manoeuvres de stationnement.

Un tel montage des rétroviseurs est généralement satisfaisant, en permettant, par installation d'un miroir central intérieur panoramique et de miroirs extérieurs orientables à distance, la couverture d'un vaste champ de vision latéral et arrière.

Cependant, du fait même de la disposition des rétroviseurs, il subsiste des zones périphériques du véhicule qui restent invisibles au conducteur et qui sont appelées angles morts. Ces angles morts obligent le conducteur à tourner plus ou moins la tête pendant les manoeuvres de dépassement de manière à s'assurer qu'aucun véhicule n'effectue de manoeuvre dans l'espace constituant l'angle mort, ce qui pourrait être dangereux et entraîner éventuellement une collision, risque augmenté par le fait que pendant cette vérification la surveillance vers l'avant du véhicule n'est plus assurée.

Pour obvier à ces inconvénients, il a été proposé des rétroviseurs extérieurs présentant des moyens destinés à supprimer plus ou moins l'angle mort de chaque rétroviseur extérieur. A cet effet, le miroir de rétroviseur peut, soit être muni d'un élément rapporté réfléchissant plan ou courbe, en saillie par rapport à lui, soit être sous forme d'un miroir sphérique ou asphérique.

Les miroirs comportant deux éléments réfléchissants sont généralement formés par un élément de plus grande surface destiné à la vue arrière latérale et par un élément de plus petite surface servant à couvrir partiellement l'angle mort correspondant.

De tels miroirs de rétroviseur extérieur nécessitent, cependant, des investissements de fabrication importants, du fait que chaque modèle de rétroviseur, pour tenir compte des normes en matière de surface de vision latérale arrière minimale, sera équipé de miroirs différents.

Les miroirs sphériques ou asphériques sont réalisés à partir d'une ébauche plane, par déformation à chaud sur un gabarit. De tels miroirs nécessitent des coûts de fabrication importants entraînant des prix de revient élevés des rétroviseurs obtenus. En outre, ces miroirs ne permettent pas l'obtention d'une image non déformée.

On connaît, par ailleurs, par GB-A-2 126 548, un rétroviseur extérieur comportant un premier miroir plan et un second miroir convexe contigu au premier, ces miroirs étant montés sur un porte miroir commun et déterminant une surface réfléchissante continue.

De même, le document GB-A-2 261 861 a pour objet un rétroviseur extérieur comportant deux miroirs adjacents formant une surface réfléchissante convexe. Ces deux miroirs peuvent être, soit adjacents, soit d'un seul tenant et reliés par une partie incurvée.

Les miroirs ainsi réalisés présentent, cependant, tous l'inconvénient de ne pas être adaptés à une mise en oeuvre sur des modèles de rétroviseurs différents, de sorte que chaque modèle nécessite, au moins pour la partie de miroir destinée à couvrir partiellement l'angle mort, un miroir spécifique, ce qui entraîne des frais de fabrication correspondants.

La présente invention a pour but de pallier les inconvénients des rétroviseurs extérieurs connus en proposant un porte-miroir permettant, tout en maintenant un confort de vision optimal, d'améliorer sensiblement le champ de vision vers l'arrière, ce à un faible prix de revient.

A cet effet, l'invention a pour objet un parle-miroir, destiné à être monté dans un boîtier de rétroviseur extérieur par l'intermédiaire d'un dispositif de montage pivotable à commande directe par appui sur le miroir équipant ledit porte-miroir ou à commande à distance au moyen d'un dispositif à actionnement manuel ou motorisé, caractérisé en ce qu'il comporte une zone réfléchissante divergente par rapport au miroir, s'étendant latéralement en prolongement de la surface de réception du miroir, en position de service du rétroviseur, et dont le revêtement réfléchissant est une couche réfléchissante chromée ou vernie appliquée directement sur la matière du porte-miroir formant ladite zone réfléchissante.

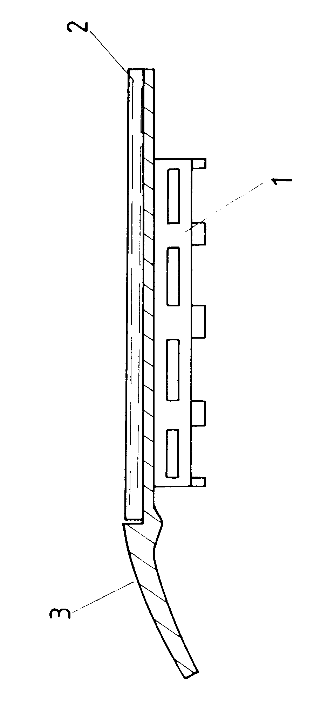

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en élévation et en coupe du porte-miroir conforme à l'invention.

La figure unique du dessin annexé représente un porte-miroir 1 destiné à être monté dans un boîtier de rétroviseur extérieur par l'intermédiaire d'un dispositif de montage pivotable à commande directe par appui sur le miroir 2 équipant ledit porte-miroir 1 ou à commande à distance au moyen d'un dispositif à actionnement manuel ou motorisé.

Conformément à l'invention, le porte-miroir 1 comporte une zone réfléchissante 3 divergente par rapport au miroir 2, s'étendant en prolongement de la surface de réception du miroir 2, de préférence latéralement par rapport cette surface, en position de service du rétroviseur, et dont le revêtement réfléchissant est avantageusement une couche réfléchissante chromée ou vernie appliquée directement sur la matière du porte-miroir 1 formant ladite zone réfléchissante 3.

Ainsi, le rétroviseur extérieur muni d'un tel porte-miroir 1 permet une vision habituelle de la partie arrière latérale correspondante du véhicule et une détection complémentaire dans l'espace correspondant à l'angle mort du miroir 2, grâce à la zone réfléchissante 3. La disposition de la zone réfléchissante divergente 3 est particulièrement avantageuse, du fait qu'elle permet un prolongement naturel du miroir 2 par la zone réfléchissante divergente 3 et donc un réglage simultané de cette dernière avec ledit miroir 2.

La zone réfléchissante divergente 3 peut se présenter, soit sous forme d'une surface plane, soit sous forme d'une surface sphérique ou asphérique. Dans le premier cas, l'image réfléchie par la zone 3 sera une image comparable à celle réfléchie par le miroir 2, tandis que dans le deuxième cas, cette image sera plus ou moins déformée du fait de la convexité de la surface.

Le miroir 2 peut être un miroir en verre ou en matière synthétique muni ou non d'un dispositif de dégivrage et collé sur le porte-miroir 1. Dans le mode de réalisation représenté au dessin annexé, la surface de réception du miroir 2 est une surface plane, cependant, cette surface pourrait également se présenter comme une surface convexe destinée à la réception d'un miroir 2 asphérique ou sphérique. Dans un tel cas, la réalisation du miroir 2 en matière synthétique pourrait permettre une conformation directe à la convexité du support ou porte-miroir 1, lors de son montage sur ce dernier par collage, ce qui entraînerait un coût de fabrication réduit en conséquence.

Conformément à une autre caractéristique de l'invention, non représentée au dessin annexé, la zone réfléchissante divergente 3 peut avantageusement être pourvue, sous sa surface de réception du revêtement réfléchissant, d'une plaquette de dégivrage. Une telle plaquette de dégivrage peut être intégrée directement dans la matière constitutive du porte-miroir 1 lors du moulage de ce dernier, par surmoulage, et présenter des moyens de branchement électrique débouchant derrière ledit porte-miroir 1 et coopérant avec des moyens correspondants prévus dans le boîtier du rétroviseur.

Ainsi, l'ensemble du miroir de rétroviseur à surfaces réfléchissantes multiples peut être maintenu dans un état de réflexion parfait permettant au conducteur du véhicule ainsi équipé de toujours disposer d'un angle de vision latéral arrière maximal.

Grâce à l'invention, il est possible de réaliser un porte-miroir, permettant, du fait de la prévision d'une zone réfléchissante divergente, l'obtention d'un champ de vision latéral arrière considérablement élargi, de sorte que le conducteur du véhicule ainsi équipé peut voir simultanément une image normale du champ latéral arrière et une image partielle de l'espace se trouvant dans l'angle mort correspondant. Cette deuxième image sera, selon le cas, avec ou sans déformation, suivant que la zone réfléchissante sera convexe, c'est-à-dire sphérique ou asphérique, ou plane.

En outre, l'invention permet une création de rétroviseurs plus étendue, du fait qu'elle rend parfaitement envisageable l'utilisation d'un même miroir plan sur des modèles de porte-miroirs différents dans leur forme et dans leurs dimensions, le miroir plan pouvant très bien être intégré avec une dimension figée sur des porte-miroirs, dont la surface de la zone réfléchissante divergente est variable d'un modèle de rétroviseur à un autre.

Le porte-miroir ainsi obtenu est d'un prix de revient relativement faible comparativement à celui de porte-miroirs et de miroirs permettant une rétrovision latérale optimisée et sa mise en oeuvre, ainsi que son réglage sont particulièrement simples.

La présente invention est plus particulièrement applicable dans le domaine de la réalisation de dispositifs de rétrovision pour véhicules automobiles.

Bien entendu, l'invention n'est pas limitée au mode de réalisation décrit et représenté au dessin annexé. Des modifications restent possibles. notamment du point de vue de la constitution des divers éléments ou par substitution d'équivalents techniques, sans sortir pour autant du domaine de protection de l'invention.

## Revendications

1. Porte-miroir (1), destiné à être monté dans un boîtier de rétroviseur extérieur par l'intermédiaire d'un dispositif de montage pivotable à commande directe par appui sur le miroir (2) équipant ledit porte-miroir (1) ou à commande à distance au moyen d'un dispositif à actionnement manuel ou motorisé, caractérisé en ce qu'il comporte une zone réfléchissante (3) divergente par rapport au miroir (2), s'étendant latéralement en prolongement de la surface de réception du miroir (2), en position de service du rétroviseur, et dont le revêtement réfléchissant est une couche réfléchissante chromée ou vernie appliquée directement sur la matière du porte-miroir (1) formant ladite zone réfléchissante (3).

2. Porte-miroir, suivant la revendication 1, caractérisé en ce que la zone réfléchissante divergente (3) se présente sous forme d'une surface plane.

3. Porte-miroir, suivant la revendication 1, caractérisé en ce que la zone réfléchissante divergente (3) se présente sous forme d'une surface sphérique ou asphérique.

4. Porte-miroir, suivant la revendication 1, caractérisé en ce que le miroir en verre ou en matière synthétique formant la zone réfléchissante divergente (3) est pourvue sur sa face arrière d'une plaquette de dégivrage.
